# EUROPEAN PATENT APPLICATION

(11) **EP 4 693 643 A1**
(43) Date of publication of application: **11.02.2026**
(21) Application number: 24864142.5
(22) Date of filing: 07.06.2024
(51) Int. Cl.: H01M 50/184, H01M 50/188, H01M 50/593

(54) **PLASTIC MEMBER, END COVER ASSEMBLY, BATTERY CELL, BATTERY, AND ELECTRIC DEVICE**

(30) Priority: 12.09.2023 CN 202322466761 U; 08.11.2023 CN 202323018400 U
(71) Applicant: Contemporary Amperex Technology Co., Limited, Ningde, Fujian 352100 (CN)
(72) Inventor: SU, Huasheng, Ningde, Fujian 352100 (CN); ZHENG, Yulian, Ningde, Fujian 352100 (CN); YANG, Rui, Ningde, Fujian 352100 (CN); LI, Can, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2024/098215
(87) International publication number: WO 2025/055417

(57) **Abstract**

A plastic member (23), a battery cell (20), a battery (100), and an electric device, relating to the technical field of batteries. The plastic member (23) comprises: a body (231) which is plate-shaped, wherein the body (231) is provided with a first through hole (202), and the first through hole (202) passes through the body (231) along the thickness direction; and first reinforcing members (232a) which are arranged on the body (231) and protrude from the surface of the body (231), wherein the first reinforcing members (232a) are located around the first through hole (202) and close to the first through hole (202).

## Description

### CROSS-REFERENCE TO RELATED APPLICATIONS

The present application claims priority to Chinese Patent Application No. 2023224667613, filed on September 12, 2023 and entitled "STRUCTURAL COMPONENT, END COVER ASSEMBLY, BATTERY CELL, BATTERY, AND POWER CONSUMING DEVICE", and claims priority to Chinese Patent Application No. 2023230184009, filed on November 8, 2023 and entitled "PLASTIC PART, END COVER ASSEMBLY, BATTERY CELL, BATTERY, AND POWER CONSUMING DEVICE", which are incorporated herein by reference in their entireties.

### TECHNICAL FIELD

The present application relates to the field of battery technology, and specifically, to a plastic part, an end cover assembly, a battery cell, a battery, and a power consuming device.

### BACKGROUND

Energy conservation and emission reduction are key to the sustainable development of an automotive industry, and electric vehicles have become an important part of the sustainable development of the automotive industry due to their advantages in energy conservation and environmental protection. For the electric vehicles, battery technology is also an important factor related to their development.

Batteries are widely applied in fields such as portable electronic devices, electric transportation vehicles, power tools, drones, and energy storage devices. In the battery manufacturing process, the yield rate of battery components is an issue that cannot be overlooked. Therefore, how to improve the yield rate of the battery components and reduce battery component production difficulty is an urgent technical problem to be solved in the battery technology.

### SUMMARY

The present application provides a plastic part, a battery cell, a battery, and a power consuming device, which can improve battery production efficiency.

The present application is implemented through the following technical solutions:

According to a first aspect, an example of the present application provides a plastic part, and the demolding efficiency of the plastic part is significantly improved.

The plastic part according to this example of the present application includes a body and a first reinforcing member. The body is in a plate shape and is provided with a first through hole, and the first through hole penetrates through the body in a thickness direction. The first reinforcing member is disposed on the body and protrudes from a surface of the body. The first reinforcing member is located around the first through hole and is close to the first through hole.

In the above-mentioned solution, the first reinforcing member is disposed on the body, and the first reinforcing member is located around the first through hole and is close to the first through hole, thereby allowing the first reinforcing member not only to increase the overall structural strength of the plastic part, but also, most importantly, significantly enhance the structural strength of an area around the first through hole. Accordingly, after acting force is applied to the area around the first through hole, for example, in the process of an ejector pin abutting against the area around the first through hole to demold, the deformation of the area around the first through hole is reduced, and even the overall deformation of the plastic part is reduced, thereby facilitating smooth demolding of the plastic part by the ejector pin, and improving the demolding efficiency of the plastic part.

According to some examples of the present application, a thickness of the body is t, satisfying 0.1 mm ≤ t ≤ 1.0 mm. By ensuring that the thickness of the body falls within the above-mentioned range, the overall thickness of the plastic part can be reduced, thereby decreasing a ratio of a volume of the plastic part to a space occupied by the battery cell, and enhancing the energy density of the battery cell.

According to some examples of the present application, 0.1 mm ≤ t ≤ 0.6 mm. By ensuring that the thickness of the body falls within the above-mentioned range, the overall thickness of the plastic part can be reduced, thereby decreasing the ratio of the volume of the plastic part to the space occupied by the battery cell, and enhancing the energy density of the battery cell.

According to some examples of the present application, a plurality of first reinforcing members are provided, and the plurality of first reinforcing members are spaced apart in a circumferential direction of the first through hole. Therefore, the structural strength of the area of the body around the first through hole can be enhanced, and meanwhile the structural strength of the body around the first through hole may also tend to be uniform.

According to some examples of the present application, the first reinforcing member is an arc-shaped reinforcing rib. Compared to a straight reinforcing rib, the arc-shaped reinforcing rib can better enhance the structural strength of the body around the first through hole.

According to some examples of the present application, the arc-shaped reinforcing rib is provided with a first opening, and the first opening is disposed away from the first through hole. Accordingly, the structural strength of the area of the body around the first through hole is further enhanced.

According to some examples of the present application, a central angle of the arc-shaped reinforcing rib is α, satisfying 90° ≤ α ≤ 270°. By ensuring that the central angle of the arc-shaped reinforcing rib falls within the above-mentioned range, the structural strength of the area of the body around the first through hole can be increased, while the machining difficulty of the partially open arc-shaped reinforcing rib is reduced, thereby improving the production efficiency of the plastic part.

According to some examples of the present application, 135° ≤ α ≤ 225°. By ensuring that the central angle of the arc-shaped reinforcing rib falls within the above-mentioned range, the structural strength of the area of the body around the first through hole can be increased, while the machining difficulty of the partially open arc-shaped reinforcing rib is reduced, thereby improving the production efficiency of the plastic part.

According to some examples of the present application, a radius of the arc-shaped reinforcing rib is R1, satisfying 0.5 mm ≤ R1 ≤ 5 mm. By ensuring that the radius of the arc-shaped reinforcing rib satisfies the above-mentioned condition, an area occupied by the arc-shaped reinforcing rib on the body may be small, and meanwhile combined with the above-mentioned condition regarding the central angle α of the arc-shaped reinforcing rib, the overall structure of the arc-shaped reinforcing rib is more compact. A compact arc-shaped reinforcing rib provides greater enhancement to the structural strength of the area of the body around the first through hole compared to a large-volume arc-shaped reinforcing rib.

According to some examples of the present application, 1 mm ≤ R1 ≤ 4 mm. By ensuring that the radius of the arc-shaped reinforcing rib satisfies the above-mentioned condition, an area occupied by the arc-shaped reinforcing rib on the body may be small, and meanwhile combined with the above-mentioned condition regarding the central angle α of the arc-shaped reinforcing rib, the overall structure of the arc-shaped reinforcing rib is more compact. A compact arc-shaped reinforcing rib provides greater enhancement to the structural strength of the area of the body around the first through hole compared to a large-volume arc-shaped reinforcing rib.

According to some examples of the present application, the radius of the arc-shaped reinforcing rib is R1, and a radius of the first through hole is R2, satisfying 0.06 ≤ R1/R2 ≤ 1.67. Therefore, the problem that the radius of the arc-shaped reinforcing rib is smaller than that of the first through hole, requiring more arc-shaped reinforcing ribs to keep roughly consistent strength of the area of the body around the first through hole, and also increasing the machining difficulty of the plastic part is solved. Certainly, the problem that the radius of the arc-shaped reinforcing rib is smaller than that of the first through hole, causing only a small number of arc-shaped reinforcing ribs to be placed in the area of the body around the first through hole, and leading to inconsistent strength of the area around the first through hole is solved as well.

According to some examples of the present application, 0.2 ≤ R1/R2 ≤ 1. Therefore, the problem that the radius of the arc-shaped reinforcing rib is smaller than that of the first through hole, requiring more arc-shaped reinforcing ribs to keep roughly consistent strength of the area of the body around the first through hole, and also increasing the machining difficulty of the plastic part is solved. Certainly, the problem that the radius of the arc-shaped reinforcing rib is smaller than that of the first through hole, causing only a small number of arc-shaped reinforcing ribs to be placed in the area of the body around the first through hole, and leading to inconsistent strength of the area around the first through hole is solved as well.

According to some examples of the present application, the body is provided with an ejector pin engagement area, the ejector pin engagement area is close to the first through hole, and the arc-shaped reinforcing rib is located between the ejector pin engagement area and the first through hole. Therefore, the arc-shaped reinforcing rib can not only enhance the strength of the area of the body around the first through hole but also improve the structural strength of the ejector pin engagement area, thereby making the ejector pin engagement area less prone to deformation when subjected to pushing force of the ejector pin, and improving the demolding efficiency of the plastic part.

According to some examples of the present application, the arc-shaped reinforcing rib extends in a circumferential direction of the ejector pin engagement area. The arc-shaped first reinforcing member can not only enhance the structural strength of an area around the ejector pin engagement area but also keep the structural strength of the area around the ejector pin engagement area uniform.

According to some examples of the present application, the body is provided with a second through hole for an electrode terminal to penetrate through, and the second through hole penetrates through the body in a thickness direction. At least part of the first reinforcing member is located between the first through hole and the second through hole. Alternatively, the plurality of first reinforcing members are provided, and at least part of the plurality of first reinforcing members are located between the first through hole and the second through hole. Therefore, the overall structural strength of the plastic part is enhanced, and an ejection mechanism is facilitated to rapidly demold the plastic part.

According to some examples of the present application, the body is provided with a first surface in the thickness direction. The plastic part further includes protrusions disposed on the first surface in a protruding manner, the protrusions are configured to abut against the electrode assembly, and the first through hole is close to the protrusions. Since the first through hole is close to the protrusion in a middle area of the plastic part, the structural strength of an area between the first through hole and the protrusion in the middle area of the plastic part does not decrease significantly.

According to some examples of the present application, the body is provided with a second through hole for an electrode terminal to penetrate through, and the first through hole is located between the second through hole and the protrusion. Therefore, the structural strength of the area around the first through hole can be enhanced, and meanwhile the structural strength of an area around the second through hole may also be improved.

According to some examples of the present application, the first reinforcing member is disposed on the first surface, and a height to which the first reinforcing rib protrudes from the first surface is less than a height to which the protrusion protrudes from the first surface. Therefore, a space defined by the protrusion and the body can be fully utilized, and the protruding reinforcing member does not add no additional thickness to a structural component.

According to some examples of the present application, a maximum length of the body is a, and a maximum width of the body is b, satisfying 150 mm ≤ a ≤ 500 mm and 20 mm ≤ b ≤ 150 mm. The plastic part is of a large yet thin structure, thereby reducing the ratio of the volume of the plastic part to a space occupied by the battery cell, and enhancing the energy density of the battery cell.

According to some examples of the present application, 150 mm ≤ a ≤ 350 mm and 20 mm ≤ b ≤ 100 mm. The plastic part is of a large yet thin structure, thereby reducing the ratio of the volume of the plastic part to the space occupied by the battery cell, and enhancing the energy density of the battery cell.

According to some examples of the present application, a second reinforcing member is further included, where the second reinforcing member is located in an end area and/or the middle area of the body in a length direction. Accordingly, the structural strength of other areas of the body in addition to the area near the first through hole and the overall structural strength of the plastic part are enhanced.

According to some examples of the present application, the second reinforcing member includes a first reinforcing rib and a second reinforcing rib, the first reinforcing rib extends in a length direction, and the second reinforcing rib extends in a width direction. The intersection of the first reinforcing rib and the second reinforcing rib can further improve the structural strength of the plastic part and the demolding efficiency of the plastic part.

According to some examples of the present application, the body is provided with a second through hole for an electrode terminal to penetrate through, and one end of the first reinforcing rib extends to an edge of the second through hole. Accordingly, the first reinforcing rib may increase the structural strength of the area around the second through hole, thereby improving the overall structural strength of the plastic part.

According to a second aspect, an example of the present application provides an end cover assembly, including an end cover, an electrode terminal, and the above-mentioned plastic part. The electrode terminal is installed on the end cover, the plastic part is disposed on an inner side of the end cover, and the body is provided with a second through hole for the electrode terminal to penetrate through.

According to some examples of the present application, the body is provided with a first surface away from the end cover, the first reinforcing member is disposed on the first surface in a protruding manner, and a height to which the first reinforcing member protrudes from the first surface is less than or equal to a height to which the electrode terminal protrudes from the first surface. Therefore, the reinforcing member can fully utilize a space defined by the electrode terminal and the body, and the protruding reinforcing member does not add no additional thickness to the plastic part. In other words, the arrangement of the reinforcing member does not reduce the energy density of the battery cell.

According to a third aspect, an example of the present application provides a battery cell, including the above-mentioned end cover assembly.

According to a fourth aspect, an example of the present application provides a battery, including the above-mentioned battery cell.

According to a fifth aspect, an example of the present application provides a power consuming device, including the above-mentioned battery.

Additional aspects and advantages of the present application will be partially given in the following description, some of which will become apparent from the following description or may be learned from practices of the present application.

### BRIEF DESCRIPTION OF THE DRAWINGS

To describe the technical solutions of the examples of the present application more clearly, the following briefly describes the accompanying drawings required for the examples. It should be understood that, the following accompanying drawings show only some examples of the present application, which should not be considered as a limitation on the scope. Those of ordinary skill in the art may still derive other related accompanying drawings according to the accompanying drawings without creative efforts.
FIG. 1 is a schematic diagram of a vehicle according to a first example of the present application;
FIG. 2 is a schematic diagram of a battery according to the first example of the present application;
FIG. 3 is a schematic diagram of a battery cell according to the first example of the present application;
FIG. 4 is a schematic diagram of a plastic part according to the first example of the present application;
FIG. 5 is a schematic diagram of an end cover assembly in one direction according to the first example of the present application;
FIG. 6 is a schematic diagram of the end cover assembly in another direction according to the first example of the present application;
FIG. 7 is a cross-sectional view in an A-A direction in FIG. 5; and
FIG. 8 is a partially enlarged view of B circled in FIG. 4.

Reference numerals: vehicle 1000, battery 100, controller 200, motor 300, box 10, battery cell 20, first sub-box 11, second sub-box 12, shell 21, electrode assembly 22, electrode terminal 25, case 211, end cover 212,
end cover assembly 210, plastic part 23, body 231, first reinforcing member 232a, second reinforcing member 232b, first reinforcing rib 232b1, second reinforcing rib 232b2, protrusion 233,
body maximum length a, body maximum width b, body thickness t, first direction X, second direction Y,
first receiving area 201a, second receiving area 201b, first through hole 202, end area 203, middle area 204, second through hole 205, and first surface 206.

### DETAILED DESCRIPTION

To make the objectives, technical solutions, and advantages of examples of the present application clearer, the following clearly and completely describes the technical solutions in the examples of the present application with reference to the accompanying drawings in the examples of the present application. Apparently, the described examples are merely some rather than all of the examples of the present application. All other examples obtained by those of ordinary skill in the art based on the examples of the present application without creative efforts shall fall within the protection scope of the present application.

Unless otherwise defined, meanings of all technical and scientific terms used in the present application are the same as those commonly understood by those skilled in the art to which the present application belongs; and the terms used in the specification of the present application are merely for the purpose of describing specific examples, but are not intended to limit the present application. The terms "include" and "have" and any variations thereof in the specification and the claims of the present application as well as the descriptions of the accompanying drawings are intended to cover non-exclusive inclusion. The terms "first", "second", etc. in the specification and claims of the present application or the above-mentioned accompanying drawings are intended to distinguish different objects, and not to describe a specific order or primary-secondary relationship.

Reference to "example" in the present application means that a particular feature, structure or characteristic described in combination with the example may be included in at least one example of the present application. The term appearing at different positions of the specification may not refer to the same example or an independent or alternative example that is mutually exclusive with other examples. Those skilled in the art explicitly or implicitly understand that the examples described in the present application may be combined with other examples.

In the descriptions of the present application, it should be noted that, unless otherwise expressly specified and limited, the terms "mount", "connect", "connection" and "attachment" should be understood in a broad sense. For example, the connection may be a fixed connection, a detachable connection, or an integral connection; or the connection may be a direct connection, an indirect connection through an intermediate medium, or internal communication between two elements. Those of ordinary skill in the art may understand the specific meanings of the above-mentioned terms in the present application according to specific situations.

The term "and/or" in the present application only describes an association relationship between associated objects and represents that three relationships may exist. For example, A and/or B may represent the following three cases: only A exists, both A and B exist, and only B exists. In addition, the character "/" in the present application generally indicates an "or" relationship between the associated objects.

In the present application, "a plurality of" means two or more (including two). Similarly, "a plurality of groups" means two or more groups (including two groups), and "a plurality of pieces" means two or more pieces (including two pieces).

In some examples, a battery may be a battery module. When there are a plurality of battery cells, the plurality of battery cells are arranged and fixed to form a battery module.

In some examples, the battery may be a battery pack. The battery pack includes a box and a battery cell, and the battery cell or the battery module is accommodated in the box.

In some examples, the box may be used as a part of a chassis structure of a vehicle. For example, a part of the box may be at least a part of a floor of the vehicle, or a part of the box may be at least a part of a cross beam and a longitudinal beam of the vehicle.

In some examples, the battery may be an energy storage apparatus. The energy storage apparatus includes an energy storage container, an energy storage electric cabinet, and the like.

In the examples of the present application, the battery cell may be a secondary battery. The secondary battery refers to a battery cell that can be recharged to activate active materials for continuous use after the battery cell is discharged.

The battery cell may include, but is not limited to, a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like.

The battery cell generally includes an electrode assembly. The electrode assembly includes a positive electrode, a negative electrode, and a spacer. During charging and discharging of the battery cell, active ions (e.g., lithium ions) are intercalated and deintercalated back and forth between the positive electrode and the negative electrode. The spacer is disposed between the positive electrode and the negative electrode, mainly to prevent a short circuit between the positive and negative electrodes and to allow active ions to pass through.

In some examples, the positive electrode may be a positive electrode plate. The positive electrode plate may include a positive electrode current collector and a positive electrode active material disposed on at least one surface of the positive electrode current collector.

As an example, the positive electrode current collector has two surfaces opposite to each other in a thickness direction of the positive electrode current collector, and the positive electrode active material is disposed on either or both of the two opposite surfaces of the positive electrode current collector.

As an example, the positive electrode current collector may be a metal foil or a composite current collector. For example, silver-plated aluminum or silver-plated stainless steel, stainless steel, copper, aluminum, nickel, a carbon electrode, carbon, nickel, titanium, or the like may be used as the metal foil. The composite current collector may include a high-polymer material substrate layer and a metal layer. The composite current collector may be formed by forming a metal material (aluminum, an aluminum alloy, nickel, a nickel alloy, titanium, a titanium alloy, silver, a silver alloy, or the like) on a high-polymer material substrate (e.g., a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials of batteries may also be used.

In some examples, the negative electrode may be a negative electrode plate. The negative electrode plate may include a negative electrode current collector.

As an example, the negative electrode current collector may be a metal foil or a composite current collector. For example, silver-plated aluminum or silver-plated stainless steel, stainless steel, copper, aluminum, nickel, a carbon electrode, carbon, nickel, titanium, or the like may be used as the metal foil.

In some examples, the negative electrode current collector has two opposite surfaces in a thickness direction of the negative electrode current collector, and a negative electrode active material is disposed on either or both of the two opposite surfaces of the negative electrode current collector.

As an example, the negative electrode active material may be a negative electrode active material used for a battery and well known in the art. As an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, the present application is not limited to these materials, and other conventional materials that can be used as the negative electrode active material for a battery may also be used. One type of these negative electrode active materials may be used individually, or two or more types of these negative electrode active materials may be used in combination.

In some embodiments, the spacer is a separator. The type of the separator is not particularly limited in the present application, and any well-known separator of a porous structure having good chemical stability and mechanical stability may be used.

As an example, a main material of the separator may be selected from at least one of glass fiber, non-woven fabric, polyethylene, polypropylene, polyvinylidene fluoride, or ceramics. The separator may be a single-layer film or a multi-layer composite film without special limitations. When the separator is the multi-layer composite film, a material in each layer may be identical or different, which is not particularly limited. The spacer may be an independent component located between the positive and negative electrodes, or may be attached to surfaces of the positive and negative electrodes.

In some embodiments, the spacer is a solid electrolyte. The solid electrolyte is disposed between the positive electrode and the negative electrode, and simultaneously functions to transfer an ion and isolate the positive electrode and the negative electrode.

In some embodiments, the battery cell further includes an electrolyte, and the electrolyte serves to conduct ions between the positive electrode and the negative electrode. The electrolyte may be in a liquid, gel, or solid state. The liquid electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorophosphate, lithium difluoro(oxalato)borate, lithium bis(oxalato)borate, lithium difluoro bis(oxalato)phosphate, or lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, or diethyl sulfone. The solvent may also be selected from an ether-based solvent. The ether-based solvent includes one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a polymer serving as a backbone network of the electrolyte, matched with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (a polyethylene oxide), polysiloxane, polycarbonate, polyacrylonitrile, polyvinylidene fluoride, polymethyl methacrylate, a singleion polymer, a polyionic liquid-lithium salt, cellulose, or the like.

As an example, the inorganic solid-state electrolyte may include one or more of an oxide solid electrolyte (crystalline perovskite, a sodium superionic conductor, a garnet, or an amorphous LiPON film), a sulfide solid electrolyte (a crystalline lithium superionic conductor (lithium germanium phosphorus sulfide or argyrodite), or amorphous sulfide), as well as a halide solid electrolyte, a nitride solid electrolyte, and a hydride solid electrolyte.

As an example, the composite solid-state electrolyte is formed by adding an inorganic solid-state electrolyte filler to a polymer solid electrolyte.

In some embodiments, the electrode assembly is a winding structure. The positive electrode plate and the negative electrode plate are wound into the winding structure.

In some embodiments, the electrode assembly is a laminating structure.

In some embodiments, the battery cell may include a shell. The shell is configured to encapsulate components such as the electrode assembly and the electrolyte. The shell may be a steel shell, an aluminum shell, a plastic shell (e.g., polypropylene), a composite metal shell (e.g., a copper-aluminum composite shell), an aluminum-plastic film, or the like.

In some embodiments, the shell includes an end cover and a case. The case is provided with an opening, and the end cover closes the opening to form a closed space for accommodating materials such as the electrode assembly and the electrolyte. The case may be provided with one or more openings. One or more end covers may also be provided.

In some embodiments, at least one electrode terminal is disposed on the shell, and the electrode terminal is electrically connected to a tab of the electrode assembly. The electrode terminal may be directly connected to the tab, or may be indirectly connected to the tab by using an adapting member. The electrode terminal may be disposed on the end cover, or may be disposed on the case.

In some embodiments, an explosion-proof valve is disposed on the shell. The explosion-proof valve is configured to release internal pressure of the battery cell.

As an example, the battery cell may be a cylindrical battery cell, a prismatic battery cell, a soft packet battery cell, or a battery cell in another shape. The prismatic battery cell includes a square-shell battery cell, a blade-shaped battery cell, or a multi-prismatic battery. The multi-prismatic battery is, for example, a hexagonal prismatic battery, which is not particularly limited in the examples of the present application.

The battery mentioned in the examples of the present application is a single physical module including one or more battery cells to provide a higher voltage and a higher capacity.

In some examples, a battery may be a battery module. When there are a plurality of battery cells, the plurality of battery cells are arranged and fixed to form a battery module.

In some examples, the battery may be a battery pack. The battery pack includes a box and a battery cell, and the battery cell or the battery module is accommodated in the box.

In some examples, the box may be used as a part of a chassis structure of a vehicle. For example, a part of the box may be at least a part of a floor of the vehicle, or a part of the box may be at least a part of a cross beam and a longitudinal beam of the vehicle.

In some examples, the battery may be an energy storage apparatus. The energy storage apparatus includes an energy storage container, an energy storage electric cabinet, and the like.

The battery has prominent advantages such as a high energy density, minimal environmental pollution, a large power density, a long service life, a wide application scope, and a low self-discharge coefficient, which is a crucial component in modern new energy development.

Design factors in many aspects need to be all considered for the development of the battery technology, such as an energy density, a discharge capacity, a charge-discharge rate, and other performance parameters. In addition, the assembly efficiency of the battery also needs to be considered.

For ease of description in the following examples, a power consuming device being a vehicle 1000 in an example of the present application is used as an example for illustration.

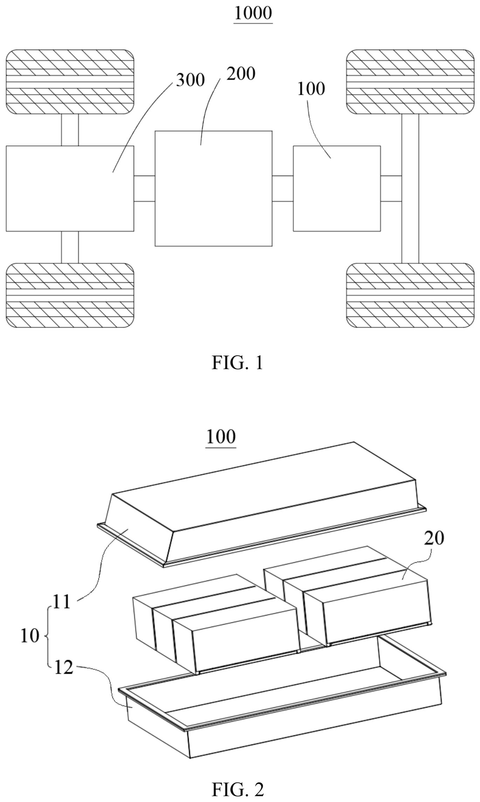

Referring to FIG. 1, FIG. 1 is a schematic structural diagram of a vehicle according to some examples of the present application. The vehicle 1000 may be a fuel powered vehicle, a gas powered vehicle, or a new energy vehicle. The new energy vehicle may be a pure electric vehicle, a hybrid electric vehicle, an extended range vehicle, or the like. A battery 100 is disposed inside the vehicle 1000, and the battery 100 may be disposed at a bottom, head, or tail of the vehicle 1000. The battery 100 may be used for supplying power to the vehicle 1000. For example, the battery 100 may serve as an operating power supply of the vehicle 1000, and is used in a circuit system of the vehicle 1000. For example, the battery 100 is used for operating electricity requirements during starting, navigation, and operation of the vehicle 1000.

The vehicle 1000 may further include a controller 200 and a motor 300. The controller 200 is configured to control the battery 100 to supply power to the motor 300, for example, to meet the operating electricity requirements during starting, navigation, and traveling of the vehicle 1000.

In some examples of the present application, the battery 100 may serve not only as an operating power supply of the vehicle 1000, but also as a driving power supply of the vehicle 1000, to replace or partially replace fuel or natural gas to provide driving power for the vehicle 1000.

Referring to FIG. 2, FIG. 2 is an exploded view of a battery according to some examples of the present application. A battery 100 includes a box 10 and battery cells 20, where the battery cells 20 are accommodated in the box 10. The box 10 is configured to provide an accommodating space for the battery cells 20. The box 10 may be of a variety of structures. In some examples, the box 10 may include a first sub-box 11 and a second sub-box 12, the first sub-box 11 and the second sub-box 12 cover each other, and the first sub-box 11 and the second sub-box 12 jointly define the accommodating space for accommodating the battery cells 20. The second sub-box 12 may be of a hollow structure with one end open, the first sub-box 11 may be of a plate-shaped structure, and the first sub-box 11 covers an open side of the second sub-box 12, so that the first sub-box 11 and the second sub-box 12 jointly define the accommodating space. Alternatively, each of the first sub-box 11 and the second sub-box 12 may be of a hollow structure with one side open, and an open side of the first sub-box 11 covers the open side of the second sub-box 12.

In the battery 100, there may be a plurality of battery cells 20, and the plurality of battery cells 20 may be connected in series, parallel, or series-parallel. Series-parallel connection means that both series connection and parallel connection exist among the plurality of battery cells 20. The plurality of battery cells 20 may be directly connected in series, parallel, or series-parallel together, and then a whole formed by the plurality of battery cells 20 is accommodated in the box 10. Certainly, the battery 100 may also be in the form of a plurality of battery modules formed by the plurality of battery cells 20 that are first connected in series, parallel, or series-parallel, and the plurality of battery modules are then connected in series, parallel, or series-parallel to form a whole and accommodated in the box 10. The battery 100 may also include other structures. For example, the battery 100 may further include a busbar component for implementing an electrical connection between the plurality of battery cells 20.

The battery cell 20 may be a secondary battery or a primary battery. The battery cell 20 may also be a lithium-sulfur battery, a sodium-ion battery, or a magnesium-ion battery, but is not limited thereto.

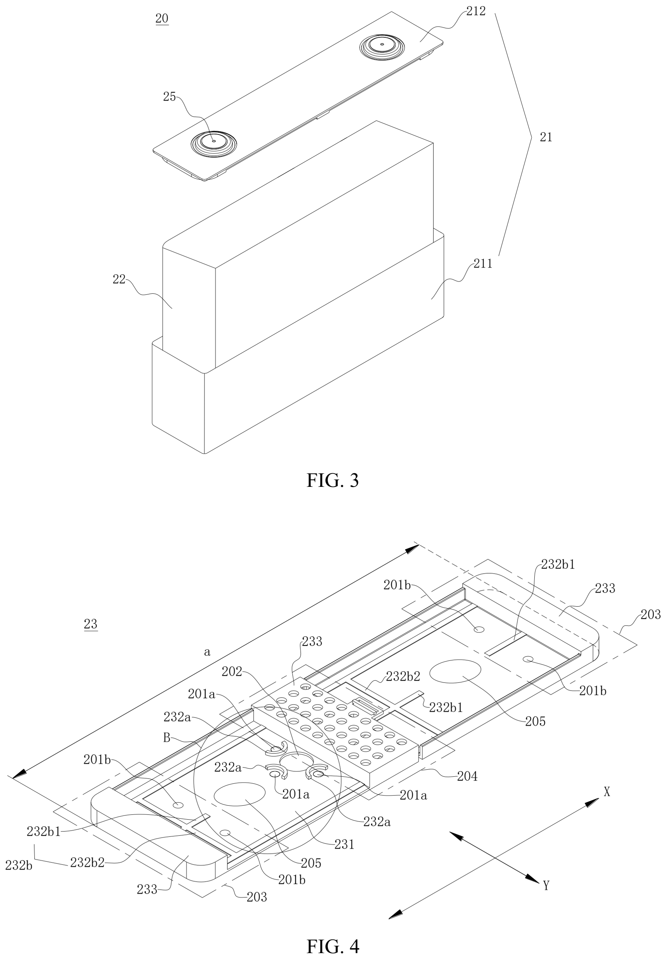

Referring to FIG. 3, FIG. 3 is an exploded view of a battery cell according to some examples of the present application. As shown in FIG. 3, the battery cell 20 includes a shell 21, an electrode assembly 22, and an electrode terminal 25. The shell 21 includes a case 211 and an end cover 212. The case 211 has an opening, and the end cover 212 closes the opening, to isolate an internal environment of the battery cell 20 from an external environment.

The case 211 is an assembly configured to form the internal environment of the battery cell 20 in cooperation with the end cover 212, where the formed internal environment may be used for accommodating the electrode assembly 22, an electrolyte, and another component. The case 211 and the end cover 212 may be independent components. The case 211 may have a plurality of shapes and sizes. Specifically, a shape of the case 211 may be determined according to a specific shape and size of the electrode assembly 22. The case 211 may be made of a plurality of materials, such as copper, iron, aluminum, stainless steel, an aluminum alloy, or plastic.

The end cover 212 refers to a component that covers the opening of the case 211 to isolate the internal environment of the battery cell 20 from the external environment. Without limitation, a shape of the end cover 212 may be adapted to the shape of the case 211 to fit the case 211. Optionally, the end cover 212 may be made of a material with certain hardness and strength (e.g., an aluminum alloy), so that the end cover 212 is less likely to deform under extrusion and collision, thereby allowing the battery cell 20 to have higher structural strength and improved reliability. Functional components such as an electrode terminal may be disposed on the end cover 212. The electrode terminal may be configured to electrically connect to the electrode assembly 22 to output or input electrical energy of the battery cell 20. The end cover 212 may also be made of a plurality of materials, such as copper, iron, aluminum, stainless steel, an aluminum alloy, or plastic, which is not particularly limited in the examples of the present application. In some examples, an insulating structure may be further disposed on an inner side of the end cover 212. The insulating structure may be configured to isolate electrical connection components in the case 211 from the end cover 212, to reduce a risk of a short circuit. Exemplarily, the insulating structure may be made of plastic, rubber, or the like.

The electrode assembly 22 is a component in the battery cell 20 that undergoes electrochemical reactions. The case 211 may include one or more electrode assemblies 22 inside. The electrode assembly 22 is mainly formed by winding or stacking a positive electrode plate and a negative electrode plate, and a separator is generally disposed between the positive electrode plate and the negative electrode plate, where the separator is configured to separate the positive electrode plate and the negative electrode plate, to avoid an internal short circuit between the positive electrode plate and the negative electrode plate. Parts of the positive electrode plate and the negative electrode plate with active materials constitute a main portion of the electrode assembly, while parts of the positive electrode plate and the negative electrode plate without active materials separately constitute tabs. A positive electrode tab and a negative electrode tab may be located at one end of the main portion together or at two ends of the main portion separately. During charging and discharging of the battery, a positive electrode active material and a negative electrode active material react with the electrolyte, and the tabs are connected to the electrode terminal to form a current loop.

The battery is widely applied in fields such as portable electronic devices, electric transportation vehicles, power tools, drones, and energy storage devices. The energy density of the battery directly determines an energy storage capacity of the battery; the higher the energy density of the battery, the greater electrical capacity a battery of the same volume can have, thereby allowing for storing more electrical energy. Therefore, after the battery is installed on the power consuming device, a use duration of the power consuming device can be prolonged.

A thickness of the end cover assembly and the case may affect the energy density of the battery. Therefore, as the demand for the energy density of the battery is increasingly high, the end cover assembly and the case are increasingly thin. As a part of the end cover assembly, a structural component (i.e., a lower plastic part of the battery) disposed on the inner side of the end cover is also increasingly thin.

However, the thinner the structural component, the greater the production difficulty of the structural component becomes. It is specifically embodied in a fact that after injection molding of the structural component, due to a thin structure and low structural strength, in a process of ejecting the structural component through an ejection mechanism, the structural component significantly deforms, in particular, an area around a part making contact with an ejector pin is prone to deformation, and as a result, the structural component is not likely to be ejected, which reduces the demolding efficiency of the structural component and may even cause damage to the structural component during ejection.

Therefore, the present application provides a structural component 23 with strength significantly enhanced, thereby greatly improving the demolding efficiency of the structural component 23 and reducing a damage rate of the structural component 23 in a demolding process.

As shown in FIG. 4, the structural component 23 according to this example of the present application may include a body 231 and a reinforcing member.

The body 231 may be configured as a plate-shaped structure. The body 231 may be made of insulating materials such as plastic. To achieve a higher energy density of the battery cell 20, the thickness of the structural component 23 or the body 231 is small, resulting in a thin structure for the body 231. A receiving area is disposed on the body 231, which may receive acting force. For example, in the demolding process, the ejector pin may abut against the receiving area and apply the acting force to the receiving area, thereby demolding the structural component 23 from a mold.

The receiving area may have a mark. For example, the mark may be etched or coated onto the receiving area, as long as the contact between the ejector pin and the receiving area is facilitated after the receiving area has the mark. The receiving area may also be a groove with a certain depth, thereby allowing the ejector pin to conveniently fit with the groove, which not only achieves the contact between the ejector pin and the receiving area but also serves as a positioning function.

The present application does not limit a type of the mark on the receiving area, as long as the mark on the receiving area can satisfy the easy contact between the ejector pin and the receiving area.

The reinforcing member is fixed to the body 231. The reinforcing member and the body 231 may form a split structure, and the reinforcing member may be fixed to the body 231 through methods such as adhesion or thermal fusion. The reinforcing member and the body 231 may also form an integrally-formed member. For example, the reinforcing member and the body 231 may be integrally formed through injection molding.

At least part of the reinforcing member is disposed around the receiving area, and therefore the reinforcing member can enhance the structural strength of the receiving area. The reinforcing member may be close to the receiving area or may also extend to the receiving area, as long as the application of the acting force to the receiving area is not influenced.

The reinforcing member may be a reinforcing rib that protrudes from a surface of the body 231 and may be disposed around the receiving area. The reinforcing member may also be a reinforcing protrusion, there may be a plurality of reinforcing protrusions, and the plurality of reinforcing protrusions may be disposed around the receiving area.

It should be noted that the structural component 23 may be made of a plastic material, that is, the structural component 23 may be a plastic part. In the examples of the present application, the structural component 23 and the plastic part refer to the same component.

The body 231 may be provided with a first through hole 202. The first through hole 202 may penetrate through the body 231 in a thickness direction of the body 231. The reinforcing member may include a first reinforcing member 232a. The first reinforcing member 232a is disposed on the body 231. The first reinforcing member 232a may be disposed on at least one of two side surfaces of the body 231 in the thickness direction. The first reinforcing member 232a may also protrude from the surface of the body 231. The first reinforcing member 232a may be located at a position around the first through hole 202 and close to the first through hole 202.

In other words, the first reinforcing member 232a may be configured as a reinforcing rib, and therefore the first reinforcing member 232a may enhance the structural strength of the body 231. The first reinforcing member 232a can particularly enhance the structural strength of an area of the body 231 around the first through hole 202. Therefore, when the ejector pin pushes against the area of the body 231 around the first through hole 202 to complete demolding, the deformation of the area of the body 231 around the first through hole 202 can be reduced, thereby facilitating the ejection of the plastic part and improving the demolding efficiency of the plastic part.

According to the structural component 23 of this example of the present application, by arranging the reinforcing member on the body 231 and arranging at least part of the reinforcing member around the receiving area, the reinforcing member can not only increase the overall structural strength of the structural component 23, but also, most importantly, significantly enhance the structural strength of the receiving area and the area around the receiving area. Accordingly, after the acting force is applied to the receiving area, for example, in the process of the ejector pin abutting against the receiving area to demold, the deformation of the area around the receiving area is reduced, and even the overall deformation of the structural component 23 is reduced, thereby facilitating smooth demolding of the structural component 23 by the ejector pin, and improving the demolding efficiency of the structural component 23.

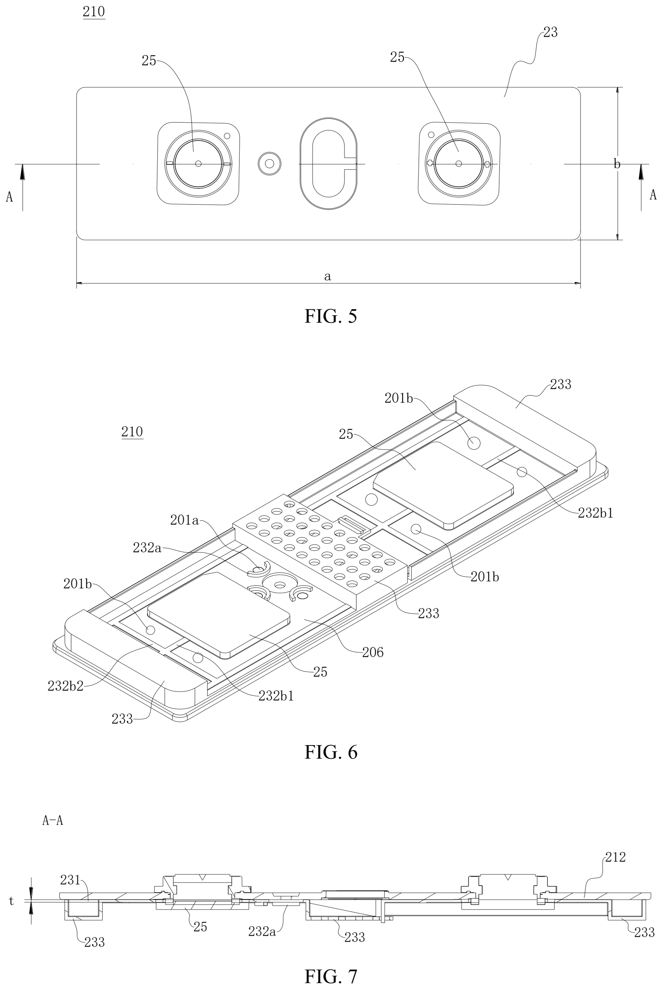

In some examples of the present application, as shown in FIG. 7, a thickness of the body 231 is t, satisfying 0.1 mm ≤ t ≤ 1.0 mm. For example, the thickness t of the body 231 may be 0.1 mm, 0.2 mm, 0.3 mm, 0.4 mm, 0.5 mm, 0.6 mm, 0.7 mm, 0.8 mm, 0.9 mm, or 1.0 mm. By ensuring that the thickness of the body 231 falls within the above-mentioned range, the overall thickness of the structural component 23 can be reduced, thereby decreasing a ratio of a volume of the structural component 23 to a space occupied by the battery cell 20 and enhancing the energy density of the battery cell 20. The above-mentioned thickness values of the body 231 are merely common examples of the thickness of the body 231. As long as the thickness of the body 231 falls within the above-mentioned range, the thickness is within the protection scope of the present application.

According to some examples of the present application, the thickness of the body 231 is t, satisfying 0.1 mm ≤ t ≤ 0.6 mm. For example, the thickness t of the body 231 may be 0.1 mm, 0.2 mm, 0.3 mm, 0.4 mm, 0.5 mm, or 0.6 mm. In other words, the thickness of the body 231 may be further reduced, thereby further decreasing the overall thickness of the structural component 23, reducing the ratio of the volume of the structural component 23 to the space occupied by the battery cell 20, and enhancing the energy density of the battery cell 20. The above-mentioned thickness values of the body 231 are merely common examples of the thickness of the body 231. As long as the thickness of the body 231 falls within the above-mentioned range, the thickness is within the protection scope of the present application.

In some examples of the present application, as shown in FIG. 5, a maximum length of the body 231 is a, and a maximum width of the body 231 is b, satisfying 150 mm ≤ a ≤ 500 mm and 20 mm ≤ b ≤ 150 mm.

It should be noted that the body 231 may be configured as a rectangular plate-shaped structure, accordingly, the length of the body 231 is the above-mentioned maximum length, and the width of the body 231 is the above-mentioned maximum width. Certainly, the body 231 may also be of an obround structure, as long as it is ensured that the structural component 23 can serve to separate the end cover 212 from the electrode assembly 22.

In some examples of the present application, the maximum length of the body 231 may be 150 mm, 180 mm, 210 mm, 240 mm, 270 mm, 310 mm, 340 mm, 350 mm, 380 mm, 410 mm, 440 mm, 470 mm, or 500 mm, while the maximum width of the body 231 may be 20 mm, 40 mm, 60 mm, 80 mm, 100 mm, 120 mm, 140 mm, or 150 mm. Since the maximum length and the maximum width of the body 231 fall within the above-mentioned ranges, a function of isolating the end cover 212 from the electrode assembly 22 can be achieved. When combined with the above-mentioned thickness of the body 231, the structural component 23 is of a large yet thin structure, thereby reducing the ratio of the volume of the structural component 23 to the space occupied by the battery cell 20 and enhancing the energy density of the battery cell 20. The above-mentioned length values and width values of the body 231 are merely common examples of the maximum length and the maximum width of the body 231. Any maximum length and maximum width of the body 231 falling within the above-mentioned respective ranges are within the protection scope of the present application.

In some examples of the present application, the maximum length of the body 231 is a, and the maximum width of the body 231 is b, satisfying 150 mm ≤ a ≤ 350 mm and 20 mm ≤ b ≤ 100 mm. For example, the maximum length of the body 231 may be 150 mm, 180 mm, 210 mm, 240 mm, 270 mm, 310 mm, 340 mm, or 350 mm, while the maximum width of the body 231 may be 20 mm, 40 mm, 60 mm, 80 mm, or 100 mm. Therefore, the large yet thin structure of the structural component 23 is ensured while the ratio of the volume of the structural component 23 to the space occupied by the battery cell 20 is reduced, thereby enhancing the energy density of the battery cell 20. Additionally, the structural component 23 does not suffer from excessively low strength due to overly large length and width of the body 231. The above-mentioned length values and width values of the body 231 are merely common examples of the maximum length and the maximum width of the body 231. Any maximum length and maximum width of the body 231 falling within the above-mentioned respective ranges are within the protection scope of the present application.

In some examples of the present application, a plurality of first reinforcing members 232a are provided, and the plurality of first reinforcing members 232a are spaced apart in a circumferential direction of the first through hole 202. Machining the first through hole 202 in the body 231 can weaken the strength of the area of the body 231 around the first through hole 202. Therefore, arranging the plurality of first reinforcing members 232a at intervals in the circumferential direction of the first through hole 202 can not only enhance the structural strength of the area of the body 231 around the first through hole 202 but also ensure that the structural strength of the area of the body 231 around the first through hole 202 also tends to be uniform.

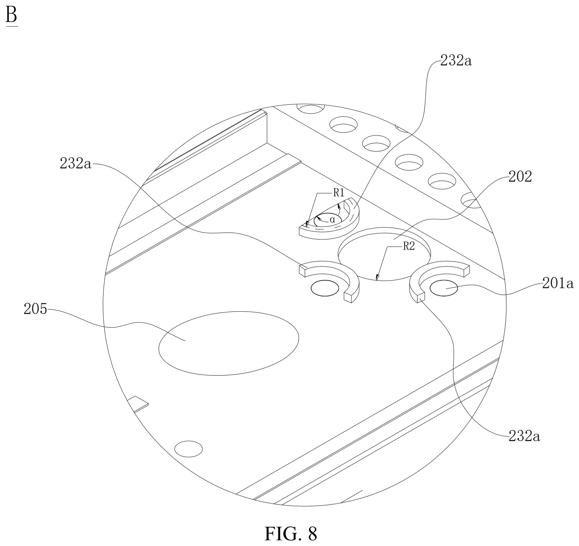

In some examples of the present application, as shown in FIG. 4 and FIG. 8, the first reinforcing members 232a are arc-shaped reinforcing ribs. Compared to straight reinforcing ribs, the arc-shaped reinforcing ribs can better enhance the structural strength of the area of the body 231 around the first through hole 202. Therefore, when the ejector pin pushes against the area of the body 231 around the first through hole 202 to complete demolding, the deformation of the area of the body 231 around the first through hole 202 can be reduced, thereby facilitating the ejection of the plastic part and improving the demolding efficiency of the plastic part.

According to some examples of the present application, since the first reinforcing members 232a are the arc-shaped reinforcing ribs rather than annular reinforcing ribs, each arc-shaped reinforcing member has a first opening that can be disposed away from the first through hole. In other words, the arc-shaped reinforcing ribs protrude towards the first through hole. Accordingly, the structural strength of the area of the body 231 around the first through hole 202 is further enhanced.

In some examples of the present application, as shown in FIG. 8, a central angle of the arc-shaped reinforcing rib is α, satisfying 90° ≤ α ≤ 270°. For example, the central angle of the arc-shaped reinforcing rib may be 90°, 120°, 150°, 180°, 210°, 240°, or 270°. By ensuring that the central angle of the arc-shaped reinforcing rib falls within the above-mentioned range, the structural strength of the area of the body 231 around the first through hole 202 can be increased, while the machining difficulty of the partially open arc-shaped reinforcing rib is reduced, thereby improving the production efficiency of the plastic part.

In some examples of the present application, the central angle α of the arc-shaped reinforcing rib satisfies 135° ≤ α ≤ 225°. For example, the central angle of the arc-shaped reinforcing rib may be 135°, 145°, 155°, 165°, 175°, 185°, 195°, 205°, 215°, or 225°. By ensuring that the central angle of the arc-shaped reinforcing rib falls within the above-mentioned range, the structural strength of the area of the body 231 around the first through hole 202 can be increased, while the machining difficulty of the partially open arc-shaped reinforcing rib is reduced, thereby improving the production efficiency of the plastic part.

According to some examples of the present application, a radius of the arc-shaped reinforcing rib is R1, satisfying 0.5 mm ≤ R1 ≤ 5 mm. For example, the radius of the arc-shaped reinforcing rib may be 0.5 mm, 1 mm, 1.5 mm, 2 mm, 2.5 mm, 3 mm, 3.5 mm, 4 mm, 4.5 mm, or 5 mm. By ensuring that the radius of the arc-shaped reinforcing rib satisfies the above-mentioned condition, an area occupied by the arc-shaped reinforcing rib on the body 231 can be reduced, and meanwhile combined with the above-mentioned condition regarding the central angle α of the arc-shaped reinforcing rib, the overall structure of the arc-shaped reinforcing rib is more compact. A compact arc-shaped reinforcing rib provides greater enhancement to the structural strength of the area of the body 231 around the first through hole 202 compared to a large-volume arc-shaped reinforcing rib, and the strength enhancement of the area around the first through hole 202 is more uniform, thereby enhancing the overall structural strength of the body 231, facilitating the quick and damage-free ejection of the plastic part by the ejection mechanism, and making demolding of the plastic part easier.

In some examples of the present application, the radius R1 of the arc-shaped reinforcing rib satisfies 1 mm ≤ R1 ≤ 4 mm. For example, the radius of the arc-shaped reinforcing rib may be 1 mm, 1.3 mm, 1.6 mm, 1.9 mm, 2.2 mm, 2.5 mm, 2.8 mm, 3.1 mm, 3.4 mm, 3.7 mm, or 4 mm. By ensuring that the radius of the arc-shaped reinforcing rib satisfies the above-mentioned condition, an area occupied by the arc-shaped reinforcing rib on the body 231 may be small, and meanwhile combined with the above-mentioned condition regarding the central angle α of the arc-shaped reinforcing rib, the overall structure of the arc-shaped reinforcing rib is more compact. A compact arc-shaped reinforcing rib provides greater enhancement to the structural strength of the area of the body 231 around the first through hole 202 compared to a large-volume arc-shaped reinforcing rib, thereby enhancing the overall structural strength of the body 231, facilitating the quick and damage-free ejection of the plastic part by the ejection mechanism, and making demolding of the plastic part easier.

Certainly, the above-mentioned radii of the arc-shaped reinforcing rib are merely some examples of the present application, and any radius of the arc-shaped reinforcing rib falling within the above-mentioned value range is within the protection scope of the present application.

It should be noted that the radius of the arc-shaped reinforcing rib refers to the following: a virtual circle formed by the radius and a center of the circle is precisely located at a middle position of the arc-shaped reinforcing rib in the thickness direction.

In some examples of the present application, the radius of the arc-shaped reinforcing rib is R1, and a radius of the first through hole is R2, satisfying 0.06 ≤ R1/R2 ≤ 1.67. For example, R1/R2 may be 0.06, 0.08, 0.10, 0.3, 0.5, 0.7, 0.9, 1.1, 1.2, 1.3, 1.4, 1.5, or 1.67. Therefore, the problem that the radius of the arc-shaped reinforcing rib is smaller than that of the first through hole 202, requiring more arc-shaped reinforcing ribs to keep roughly consistent strength of the area of the body 231 around the first through hole 202, and also increasing the machining difficulty of the plastic part is solved. Certainly, the problem that the radius of the arc-shaped reinforcing rib is smaller than that of the first through hole 202, causing only a small number of arc-shaped reinforcing ribs to be placed in the area of the body 231 around the first through hole 202, leading to inconsistent strength of the area around the first through hole 202 is solved as well.

In some examples of the present application, the radius of the arc-shaped reinforcing rib is R1, and the radius of the first through hole is R2, satisfying 0.2 ≤ R1/R2 ≤ 1. For example, R1/R2 may be 0.2, 0.3, 0.4, 0.5, 0.6, 0.7, 0.8, 0.9, or 1. Therefore, the problem that the radius of the arc-shaped reinforcing rib is smaller than that of the first through hole 202, requiring more arc-shaped reinforcing ribs to keep roughly consistent strength of the area of the body 231 around the first through hole 202, and also increasing the machining difficulty of the plastic part is solved. Certainly, the problem that the radius of the arc-shaped reinforcing rib is smaller than that of the first through hole 202, causing only a small number of arc-shaped reinforcing ribs to be placed in the area of the body 231 around the first through hole 202, leading to inconsistent strength of the area around the first through hole 202 is solved as well.

Ratios of the radius R1 of the arc-shaped reinforcing rib to the radius R2 of the first through hole in the present application are merely some examples of the present application. The ratio of the radius R1 of the arc-shaped reinforcing rib to the radius R2 of the first through hole falling within the above-mentioned range is under the protection of the present application.

According to some examples of the present application, as shown in FIG. 4, the body 231 is provided with the first through hole 202. The first through hole 202 may penetrate through the body in the thickness direction of the body. The receiving area includes a first receiving area 201a, and the first receiving area 201a is located on an outer periphery of the first through hole 202. The reinforcing member includes the first reinforcing member 232a, and the first reinforcing member 232a is located on an outer periphery of the first receiving area 201a.

It should be noted that the first receiving area 201a may be pushed against by the ejector pin in the demolding process of the plastic part, thereby allowing the ejector pin to apply force to the plastic part for demolding from the mold.

In the examples of the present application, the first receiving area 201a is an ejector pin engagement area, and the first receiving area 201a and the ejector pin engagement area refer to the same area. The ejector pin engagement area is close to the first through hole 202, and the arc-shaped reinforcing ribs are located between the ejector pin engagement area and the first through hole 202. Therefore, the arc-shaped reinforcing ribs can not only enhance the strength of the area of the body 231 around the first through hole 201 but also improve the structural strength of the ejector pin engagement area, thereby making the ejector pin engagement area less prone to deformation when subjected to pushing force of the ejector pin, and improving the demolding efficiency of the plastic part 23.

The first through hole 202 may be configured as a liquid injection hole. When the electrode assembly 22 is placed inside the case and the end cover 212 closes the opening of the case, the electrolyte may be injected into the case through the liquid injection hole. The first through hole 202 may be circular, rectangular, or in another shape, as long as the smooth progress of the liquid injection process is ensured. The first through hole 202 may be disposed in a middle area 204 or an end area 203 of the body 231. The present application does not impose specific limitations on a position of the first through hole 202 in the body 231.

The first receiving area 201a is located on the outer periphery of the first through hole 202. In other words, the first receiving area 201a is close to the first through hole 202. Since the body 231 is provided with the first through hole 202, the structural strength near the first through hole 202 becomes lower, necessitating the reinforcement of the strength of the area around the first through hole 202.

In the examples of the present application, the first reinforcing member 232a is disposed in the area around the first through hole 202, thereby allowing the first reinforcing member 232a to increase the structural strength of the area around the first receiving area 201a (i.e., the ejector pin engagement area). It should be understood that in addition to the area around the first receiving area 201a, the body 231 further includes other areas other than the area around the first receiving area 201a. Reinforcing members may also be disposed on the other areas, and the reinforcing members in the other areas may extend to the area around the first receiving area 201a. Therefore, on the premise that the structural strength of the area around the first receiving area 201a has already been enhanced by the reinforcing members in the other areas, the first reinforcing member 232a can further increase the structural strength of the area around the first receiving area 201a.

In some examples of the present application, as shown in FIG. 4, at least part of the first reinforcing member 232a is located between the first through hole 202 and the first receiving area 201a. In other words, a part of the first reinforcing member 232a may be located between the first through hole 202 and the first receiving area 201a, while another part of the first reinforcing member 232a is solely located on the outer periphery of the first receiving area 201a. Alternatively, the entire first reinforcing member 232a may be located between the first through hole 202 and the first receiving area 201a. Therefore, the structural strength of the area around the first receiving area 201a can be increased, and meanwhile the structural strength of the area around the first through hole 202 can be increased.

For example, the first reinforcing member 232a may be configured as a ring-shaped structure that encircles the first receiving area 201a. A part of the ring-shaped structure is located between the first through hole 202 and the first receiving area 201a, while another part of the ring-shaped structure is solely located on the outer periphery of the first receiving area 201a. Certainly, the first reinforcing member 232a may also be configured as a plurality of spaced protruding structures. A part of the plurality of protruding structures may be located between the first through hole 202 and the first receiving area 201a, while another part of the plurality of protruding structures are solely located on the outer periphery of the first receiving area 201a.

In some examples of the present application, a plurality of first receiving areas 201a and a plurality of first reinforcing members 232a are arranged in a one-to-one correspondence manner. The plurality of first receiving areas 201a are spaced apart on the outer periphery of the first through hole 202, and a corresponding first reinforcing member 232a is disposed between each first receiving area 201a and the first through hole 202. Therefore, the structural strength of the area around the first receiving areas 201a can be increased, and meanwhile the structural strength of the area around the first through hole 202 can be increased.

Similarly, at least part of each first reinforcing member 232a may be disposed between the corresponding first receiving area 201a and the first through hole 202. The structure or arrangement method of the first reinforcing members 232a is as described above and will not be detailed herein.

In some examples of the present application, the plurality of first reinforcing members 232a may be of a split-type structure, with a part of each first reinforcing member 232a disposed between the corresponding first receiving area 201a and the first through hole 202. For example, each first reinforcing member 232a may be configured as a ring shape that encircles the corresponding first receiving area 201a.

In some other examples of the present application, the plurality of first reinforcing members 232a may be of a split-type structure, with the entirety of each first reinforcing member 232a disposed between the corresponding first receiving area 201a and the first through hole 202. Alternatively, the plurality of first reinforcing members 232a may belong to a part of the ring-shaped structure that encircles the first through hole 202, with at least part of each first reinforcing member 232a disposed between the corresponding first receiving area 201a and the first through hole 202.

According to some examples of the present application, the first reinforcing member 232a is configured as an arc shape and extends in a circumferential direction of the first receiving area 201a. For example, the first reinforcing member 232a is an arc-shaped reinforcing rib that may extend in the circumferential direction of the first receiving area 201a (i.e., the ejector pin engagement area). The arc-shaped first reinforcing member 232a can not only increase the structural strength of the area around the first receiving area 201a but also maintain uniform structural strength of the area around the first receiving area 201a. Certainly, the first reinforcing member 232a may also be configured as a plurality of protruding structures. The plurality of protruding structures may also be disposed on the outer periphery of the first receiving area 201a along an arc-shaped trajectory, thereby not only increasing the structural strength of the area around the first receiving area 201a but also maintaining uniform structural strength of the area around the first receiving area 201a.

It should be understood that the first reinforcing member 232a may be configured as a circular ring shape. Therefore, the circular ring-shaped first reinforcing member 232a may encircle the outer periphery of the first receiving area 201a. Accordingly, the structural strength of the first receiving area 201a is increased to the greatest extent. Certainly, the first reinforcing member 232a may also be configured as a plurality of protruding structures. The plurality of protruding structures may also be disposed on the outer periphery of the first receiving area 201a along a circular-ring-shaped trajectory. The first reinforcing member 232a may also be in another shape. The present application does not impose limitations on a specific shape of the first reinforcing member 232a, as long as it is ensured that the first reinforcing member 232a is disposed on the outer periphery of the first receiving area 201a to increase the structural strength of the area around the first receiving area 201a.

In some examples of the present application, as shown in FIG. 4 and FIG. 6, the receiving area includes a second receiving area 201b. The second receiving area 201b is located in the end area 203 and/or the middle area 204 of the body 231 in the first direction. The reinforcing member includes a second reinforcing member 232b, and the second reinforcing member 232b is located in the end area 203 and/or the middle area 204.

A position of the second receiving area 201b may be understood as other areas on the body 231 apart from the first receiving area 201a, including the end area 203 and the middle area 204 in the first direction. External force may also be applied to the second receiving area 201b, thereby demolding the structural component 23 together with external force applied to the first receiving area 201a. Certainly, to mitigate the problem of excessive deformation in the area near the second receiving area 201b when the external force is applied to the second receiving area 201b, the second reinforcing member 232b may be disposed in the area near the second receiving area 201b or in the end area 203 and/or the middle area 204 of the body 231 in the first direction, thereby enhancing the structural strength of the area around the second receiving area 201b and the overall structural strength of the structural component 23.

In some examples of the present application, as shown in FIG. 4, the second reinforcing member 232b includes a first reinforcing rib 232b1 and a second reinforcing rib 232b2. The first reinforcing rib 232b1 extends in a first direction X, the second reinforcing rib 232b2 extends in a second direction Y, and the first direction X intersects with the second direction Y.

The first reinforcing rib 232b1 and the second reinforcing rib 232b2 may be configured as long-strip-shaped structures. The first reinforcing rib 232b1 may protrude from the outer surface of the body 231, and the second reinforcing rib 232b2 may also protrude from the outer surface of the body 231. The first reinforcing rib 232b1 and the second reinforcing rib 232b2 may be fixed to the body 231 through methods such as adhesion and heat fusion. Certainly, the first reinforcing rib 232b1 and the second reinforcing rib 232b2 may also be integrally formed with the body 231. The arrangement of the first reinforcing rib 232b1 and the second reinforcing rib 232b2 on the body 231 can enhance the structural strength of the structural component 23, thereby reducing deformation of the structural component 23 when the external force is applied to the receiving area and improving the demolding efficiency of the structural component 23. Moreover, the intersection of the first reinforcing rib 232b1 and the second reinforcing rib 232b2 can further improve the structural strength of the structural component 23 and the demolding efficiency of the structural component 23.

In some examples of the present application, a second through hole 205 is formed in the body 231 for an electrode terminal 25 to penetrate through, and one end of the first reinforcing rib 232b1 extends to an edge of the second through hole 205. Accordingly, the first reinforcing rib 232b1 may increase the structural strength of an area around the second through hole 205, thereby improving the overall structural strength of the structural component 23.

Certainly, one end of the second reinforcing rib 232b2 may also extend to the edge of the second through hole 205, thereby allowing the second reinforcing rib 232b2 to increase the structural strength of the area around the second through hole 205 and improving the overall structural strength of the structural component 23.

In some examples of the present application, there are a plurality of first reinforcing ribs 232b1 and a plurality of second reinforcing ribs 232b2. All the plurality of first reinforcing ribs 232b1 may extend in the first direction X, and all the plurality of second reinforcing ribs 232b2 may extend in the second direction Y. Accordingly, the plurality of first reinforcing ribs 232b1 intersect with the plurality of second reinforcing ribs 232b2 to form a grid-shaped structure, thereby further enhancing the overall structural strength of the structural component 23.

In some examples of the present application, the second through hole 205 penetrates through the body 231 in the thickness direction of the body 231, with at least part of the first reinforcing member 232a located between the first through hole 202 and the second through hole 205. In other words, since the first through hole 202 and the second through hole 205 are formed in the body 231, the strength of the areas of the body 231 close to the first through hole 202 and the second through hole 205 is reduced. Arranging the first reinforcing member 232a between the first through hole 202 and the second through hole 205 not only enhances the structural strength of the area of the body 231 close to the first through hole 202 but also improves the structural strength of the area of the body 231 close to the second through hole 205. Therefore, the overall structural strength of the plastic part is enhanced, and the ejection mechanism is facilitated to rapidly demold the plastic part.

In some other examples of the present application, there are a plurality of first reinforcing members 232a, and at least part of the plurality of first reinforcing members 232a are located between the first through hole 202 and the second through hole 205. Accordingly, the structural strength of the area of the body 231 around the first through hole 202 is enhanced, and meanwhile the structural strength of the area of the body 231 around the second through hole 205 is enhanced. Therefore, the overall structural strength of the plastic part is enhanced, and the ejection mechanism is facilitated to rapidly demold the plastic part.

In some examples of the present application, the body 231 has a first surface 206 in the thickness direction, and both the receiving area and the reinforcing member are disposed on the first surface 206. In other words, both the receiving area and the reinforcing member are disposed on the same surface of the body 231 in the thickness direction. Therefore, one surface of the body 231 in the thickness direction may not be provided with a reinforcing member protruding from the surface, thereby ensuring the stable installation of the surface on a component to be installed.

Certainly, the receiving area and the reinforcing member may also be disposed on two side surfaces of the body 231 in the thickness direction respectively, as long as it is ensured that the reinforcing member can increase the structural strength of the area around the receiving area.

In some examples of the present application, the body 231 has the first surface 206 in the thickness direction, and the reinforcing member is disposed on the first surface 206 in a protruding manner. In other words, the reinforcing member is configured as a reinforcing rib or reinforcing protrusion, and the reinforcing rib and the reinforcing protrusion may enhance the structural strength of the area around the receiving area and ensure smooth demolding of the reinforcing member under the external force.

In some examples of the present application, as shown in FIG. 4 to FIG. 7, the structural component 23 further includes a protrusion 233 that protrudes from the first surface 206. The protrusion 233 is configured to abut against the electrode assembly 22. A height to which the reinforcing member protrudes from the first surface 206 is less than a height to which the protrusion 233 protrudes from the first surface 206.

After the end cover 212 closes the opening of the case, the protrusion 233 may press against the electrode assembly 22, thereby reducing an amplitude of movement of the electrode assembly 22 within the case and ensuring the overall stability of the battery cell 20. The height to which the reinforcing member protrudes from the first surface 206 is less than the height to which the protrusion 233 protrudes from the first surface 206. For example, the first reinforcing member 232a is disposed on the first surface 206, and the height to which the first reinforcing member 232a protrudes from the first surface 206 is less than the height to which the protrusion 233 protrudes from the first surface 206. Therefore, a space defined by the protrusion 233 and the body 231 can be fully utilized, and the protruding reinforcing member does not add no additional thickness to a structural component 23.

In some examples of the present application, the plastic part further includes protrusions 233 that are disposed on the first surface in a protruding manner. The protrusions 233 are configured to abut against the electrode assembly 22, and the first through hole 202 is close to the protrusions 233. Specifically, three protrusions 233 may be arranged, two of the protrusions 233 are located at two ends of the plastic part in a length direction, and the other protrusion 233 is located in a middle area of the plastic part in the length direction. The first through hole 202 is close to the protrusion 233 in the middle area of the plastic part in the length direction. Since the first through hole 202 is close to the protrusion 233 in the middle area of the plastic part, the structural strength of an area between the first through hole 202 and the protrusion 233 in the middle area of the plastic part does not decrease significantly.

In some examples of the present application, the first through hole 202 is located between the second through hole 205 and the protrusion 233. For example, the first through hole 202 is located between the second through hole 205 and the protrusion 233 in the middle area of the plastic part in the length direction. The first reinforcing member 232a is disposed in the area around the first through hole 202, which can not only enhance the structural strength of the area around the first through hole 202 but also improve the structural strength of the area around the second through hole 205.

In some examples of the present application, the structural component 23 is made of an insulating material and is configured to isolate the end cover 212 of the battery cell 20 from the electrode assembly 22. An insulating member may be configured as a plastic part. Through the insulating structural component 23, the electrode assembly 22 and the end cover 212 can be completely separated, thereby reducing the probability of contact between the electrode assembly 22 and the end cover 212 and effectively decreasing the probability of electrical connection between the electrode assembly 22 and the end cover 212.

The following is a brief description of the end cover assembly 210 in the examples of the present application.

The end cover assembly 210 according to the examples of the present application may include an end cover 212, an electrode terminal 25, and a structural component 23. The electrode terminal 25 is installed on the end cover 212, and the structural component 23 is the structural component 23 described in the above-mentioned examples. The structural component 23 is disposed on an inner side surface of the end cover 212, and the body 231 is provided with a second through hole 205 for the electrode terminal 25 to penetrate through.

The end cover 212 has the inner side surface towards the electrode assembly 22 and an outer side surface away from the electrode assembly 22. The thickness direction of the body 231 is the same as that of the end cover 212. The structural component 23 in this example of the present application is disposed on the inner side surface of the end cover 212, which not only makes the structural component 23 thin, improving the energy density of the battery cell 20, but also makes the structural component 23 have a certain strength, reducing the deformation of the area around the receiving area when the external force is applied to the structural component 23, thereby facilitating a smoother demolding process of the structural component 23.

In some examples of the present application, the body 231 has a first surface 206 away from the end cover 212, with a reinforcing member disposed on the first surface 206 in the protruding manner. The height to which the reinforcing member protrudes from the first surface 206 is less than or equal to a height to which the electrode terminal 25 protrudes from the first surface 206. For example, the first reinforcing member 232a is disposed on the first surface 206 in the protruding manner, and the height to which the first reinforcing member 232a protrudes from the first surface 206 is less than or equal to the height to which the electrode terminal 25 protrudes from the first surface 206. Therefore, the reinforcing member can fully utilize a space defined by the electrode terminal 25 and the body 231, and the protruding reinforcing member does not add no additional thickness to a structural component 23. In other words, the arrangement of the reinforcing member does not reduce the energy density of the battery cell 20.

The following is a brief description of the battery cell 20 in the examples of the present application.

The battery cell 20 according to the examples of the present application includes the end cover assembly 210 in the above-mentioned example. Since the battery cell 20 according to the examples of the present application is provided with the above-mentioned end cover assembly 210, the battery cell 20 has a high energy density. Meanwhile, the structural component 23 within the battery cell 20 does not cause the decrease in production efficiency even when thin.

The following is a brief description of the battery 100 in the examples of the present application.

The battery 100 according to the examples of the present application includes the battery cell 20 in the above-mentioned example. Since the battery 100 according to the examples of the present application is provided with the above-mentioned battery cell 20, the battery 100 has a high energy density. Meanwhile, the structural component 23 within the battery 100 does not cause the decrease in production efficiency even when thin.

The following is a brief description of the power consuming device in the examples of the present application.

The power consuming device according to the examples of the present application includes the battery 100 in the above-mentioned examples. Since the power consuming device according to the examples of the present application is provided with the above-mentioned battery 100, a use duration of the power consuming device is prolonged, thereby enhancing use feeling of consumers.

The battery cell 20 disclosed in the examples of the present application may be used in but is not limited to a power consuming device such as a vehicle, a ship, or an aircraft. The battery cell 20, the battery, or the like disclosed in the present application may be used to form a power supply system of the power consuming device.

The examples of the present application provide the power consuming device using the battery cell 20 as a power supply. The power consuming device may include but is not limited to a mobile phone, a tablet computer, a notebook computer, an electric toy, an electric tool, an electric bicycle, an electric motorcycle, an electric vehicle, a ship, a spacecraft, and the like. The electric toy may include a fixed or mobile electric toy, such as a game console, an electric vehicle toy, an electric ship toy, and an electric airplane toy. The spacecraft may include an airplane, a rocket, a space shuttle, a spaceship, and the like.

Although the present application has been described with reference to the preferred examples, various improvements may be made without departing from the scope of the present application, and components therein may be replaced with equivalents. In particular, as long as there is no structural conflict, various technical features mentioned in various examples may be combined freely. The present application is not limited to the specific examples disclosed herein, but includes all technical solutions falling within the scope of the claims.

## Claims

1. A plastic part, comprising:
a plate-shaped body, wherein the body is provided with a first through hole, and the first through hole penetrates through the body in a thickness direction; and
a first reinforcing member, disposed on the body and protruding from a surface of the body, wherein the first reinforcing member is located around the first through hole and is close to the first through hole.

2. The plastic part according to claim 1, wherein a thickness of the body is t, satisfying 0.1 mm ≤ t ≤ 1.0 mm.

3. The plastic part according to claim 2, wherein 0.1 mm ≤ t ≤ 0.6 mm.

4. The plastic part according to any one of claims 1 to 3, wherein a plurality of first reinforcing members are provided, and the plurality of first reinforcing members are spaced apart in a circumferential direction of the first through hole.

5. The plastic part according to any one of claims 1 to 4, wherein the first reinforcing member is an arc-shaped reinforcing rib.

6. The plastic part according to claim 5, wherein the arc-shaped reinforcing rib is provided with a first opening, and the first opening is disposed away from the first through hole.

7. The plastic part according to claim 5 or 6, wherein a central angle of the arc-shaped reinforcing rib is α, satisfying 90° ≤ α ≤ 270°.

8. The plastic part according to claim 7, wherein 135° ≤ α ≤ 225°.

9. The plastic part according to claim 7 or 8, wherein a radius of the arc-shaped reinforcing rib is R1, satisfying 0.5 mm ≤ R1 ≤ 5 mm.

10. The plastic part according to claim 9, wherein 1 mm ≤ R1 ≤ 4 mm.

11. The plastic part according to any one of claims 7 to 10, wherein the radius of the arc-shaped reinforcing rib is R1, and a radius of the first through hole is R2, satisfying 0.06 ≤ R1/R2 ≤ 1.67.

12. The plastic part according to claim 11, wherein 0.2 ≤ R1/R2 ≤ 1.

13. The plastic part according to any one of claims 5 to 12, wherein the body is provided with an ejector pin engagement area, the ejector pin engagement area is close to the first through hole, and the arc-shaped reinforcing rib is located between the ejector pin engagement area and the first through hole.

14. The plastic part according to claim 13, wherein the arc-shaped reinforcing rib extends in a circumferential direction of the ejector pin engagement area.

15. The plastic part according to any one of claims 1 to 14, wherein the body is provided with a second through hole for an electrode terminal to penetrate through, and the second through hole penetrates through the body in a thickness direction; and
at least part of the first reinforcing member is located between the first through hole and the second through hole; or a plurality of first reinforcing members are provided, and at least part of the plurality of first reinforcing members are located between the first through hole and the second through hole.

16. The plastic part according to any one of claims 1 to 15, wherein the body is provided with a first surface in the thickness direction; and
the plastic part further comprises a protrusion disposed on the first surface in a protruding manner, the protrusion is configured to abut against the electrode assembly, and the first through hole is close to the protrusion.

17. The plastic part according to claim 16, wherein the body is provided with a second through hole for an electrode terminal to penetrate through, and the first through hole is located between the second through hole and the protrusion.

18. The plastic part according to claim 16 or 17, wherein the first reinforcing member is disposed on the first surface, and a height to which the first reinforcing rib protrudes from the first surface is less than a height to which the protrusion protrudes from the first surface.

19. The plastic part according to any one of claims 1 to 18, wherein a maximum length of the body is a, and a maximum width of the body is b, satisfying 150 mm ≤ a ≤ 500 mm and 20 mm ≤ b ≤ 150 mm.

20. The plastic part according to claim 19, wherein 150 mm ≤ a ≤ 350 mm and 20 mm ≤ b ≤ 100 mm.

21. The plastic part according to any one of claims 1 to 20, further comprising a second reinforcing member, wherein the second reinforcing member is located in an end area and/or a middle area of the body in a length direction.

22. The plastic part according to claim 21, wherein the second reinforcing member comprises a first reinforcing rib and a second reinforcing rib, the first reinforcing rib extends in a length direction, and the second reinforcing rib extends in a width direction.

23. The plastic part according to claim 22, wherein the body is provided with the second through hole for an electrode terminal to penetrate through, and one end of the first reinforcing rib extends to an edge of the second through hole.

24. An end cover assembly, comprising:
an end cover;
an electrode terminal, installed on the end cover; and
the plastic part according to any one of claims 1 to 23, wherein the plastic part is disposed on an inner side surface of the end cover, and the body is provided with a second through hole for the electrode terminal to penetrate through.

25. The end cover assembly according to claim 24, wherein the body is provided with a first surface away from the end cover, the first reinforcing member is disposed on the first surface in a protruding manner, and a height to which the first reinforcing member protrudes from the first surface is less than or equal to a height to which the electrode terminal protrudes from the first surface.

26. A battery cell, comprising the end cover assembly according to claim 24 or 25.

27. A battery, comprising the battery cell according to claim 26.

28. A power consuming device, comprising the battery according to claim 27.
